# EUROPÄISCHE PATENTANMELDUNG

(11) **EP 1 081 110 A2**
(43) Veröffentlichungstag der Anmeldung: **07.03.2001**
(21) Anmeldenummer: 00108294.0
(22) Anmeldetag: 14.04.2000
(51) Int. Cl.: C04B 18/22

(54) **Baustoffmischung für die Herstellung einer Beschichtung**

(30) Priorität: 01.09.1999 DE 19941527
(71) Anmelder: Heidelberger Bauchemie GmbH, 45711 Datteln (DE); PKU Pulver Kautschuk Union GmbH, 45772 Marl (DE)
(72) Erfinder: Saalbach, Christiane Dr., Diplom-Chemikerin, 45768 Marl (DE); Hesselbarth, Frank Dr., Diplom Chemiker, 45659 Recklinghausen (DE); Ernst, Uwe, Diplom-Ingenieur, 45772 Marl (DE); Görl, Udo Dr., Chemiker, 45657 Recklinghausen (DE); Kuge, Martin Dr., Chemiker, 63477 Maintal (DE)
(74) Vertreter: Rohmann, Michael, Dr.

(57) **Zusammenfassung**

Baustoffmischung für die Herstellung einer Beschichtung, wobei eine erste Komponente vorgesehen ist, die Pulverkautschuk sowie zumindest einen anorganischen Füllstoff enthält. Es ist eine zweite Komponente vorgesehen, die eine Dispersion zumindest eines Kunststoffes aufweist. Zumindest eine der beiden Komponenten enthält Anmachwasser. Beide Komponenten sind zu einem Beschichtungsmaterial mischbar.

## Beschreibung

Die Erfindung betrifft eine Baustoffmischung für die Herstellung einer Beschichtung. - Die Beschichtung ist auf den verschiedensten Untergründen aufbringbar. Mit solchen Beschichtungen kann einerseits eine Abdichtung des Untergrundes, beispielsweise gegenüber Flüssigkeiten, erreicht werden. Andererseits kann durch Aufbringen der Beschichtung auch die chemische und/oder thermische und/oder mechanische Widerstandsfähigkeit von Oberflächen erhöht werden.Die Beschichtung kann insbesondere als geschlossene Decke bzw. als geschlossener Schutzfilm auf eine Oberfläche bzw. auf einen Untergrund aufgebracht werden.

Die bekannte Baustoffmischung der eingangs genannten Art, von der die Erfindung ausgeht, ist in DD 227 429 A1 beschrieben. Diese Baustoffmischung dient als Fußbodenmörtel zur Herstellung von Fußböden. Der Mörtel enthält neben Zement, Wasser und mineralischen Zuschlagstoffen 5 bis 10 % füllstofffreie Kautschukkrümel. Die Kautschukkrümel werden durch Zerkleinern von Kautschuk, insbesondere durch Mahlen des Kautschuks, erzeugt. Die nach diesen bekannten Maßnahmen hergestellte Beschichtung in Form eines Fußbodens zeichnet sich durch eine relativ große Schichtdicke aus. Diese Beschichtung bzw. dieser Fußboden neigt in nachteilhafter Weise zur Rißbildung. Von daher mag diese Art der Beschichtung für bestimmte Zwecke als Fußboden geeignet sein, eignet sich jedoch insbesondere nicht zur Abdichtung von Untergründen bzw. für einen effektiven Schutz von bestimmten Oberflächen.

Fernerhin ist es aus DE 42 35 643 A1 bekannt, Polymerdispersionen bzw. Kunststoffdispersionen herzustellen, die als Zusatzmittel zu einem hydraulischen Bindemittel, beispielsweise zu einem Zement, verwendet werden. Die auf diese Weise hergestellten Baustoffmassen können noch andere Bestandteile, wie z. B. Sand, Kies und Verstärkungsfasern enthalten. Die nach diesen bekannten Maßnahmen erzeugten Beschichtungen lassen jedoch im Hinblick auf ihre Abdichtungseigenschaften sowie im Hinblick auf ihre thermische, mechanische und chemische Widerstandsfähigkeit sowie Rißüberbrückungsfähigkeit zu wünschen übrig.

Demgegenüber liegt der Erfindung das technische Problem zugrunde, eine Baustoffmischung der eingangs genannten Art anzugeben, mit der auf einfache, wenig aufwendige Weise eine Beschichtung hergestellt werden kann, die in einem weiten Temperaturbereich ausreichend elastisch ist und dabei im Hinblick auf ihre chemische, thermische und mechanische Widerstandsfähigkeit sowie im Hinblick auf ihre Rißüberbrückungsfähigkeit allen Anforderungen genügt.

Zur Lösung dieses technischen Problems lehrt die Erfindung eine Baustoffmischung für die Herstellung einer Beschichtung,
wobei eine erste Komponente vorgesehen ist, die Pulverkautschuk sowie zumindest einen anorganischen Füllstoff enthält,
wobei eine zweite Komponente vorgesehen ist, die eine Dispersion zumindest eines Kunststoffes aufweist,
und wobei zumindest eine der beiden Komponenten Anmachwasser enthält und die beiden Komponenten zu einem Beschichtungsmaterial mischbar sind. - Die Erfindung betrifft also eine Zweikomponenten-Baustoffmischung. Durch Mischung der beiden erfindungsgemäßen Komponenten in Gegenwart von Anmachwasser, das vorzugsweise in der zweiten Komponente enthalten ist, wird ein Beschichtungsmaterial erhalten, mit welchem eine Beschichtung herstellbar ist. Die Erfindung betrifft im übrigen auch ein entsprechendes Verfahren zur Herstellung einer Baustoffmischung.

Beschichtung meint im Rahmen der Erfindung alle möglichen Verwendungen im Rahmen derer das Beschichtungsmaterial flächig auf einen Untergrund bzw. eine Oberfläche aufgebracht wird. Mit der erfindungsgemäßen Baustoffmischung können vor allem elastische Beschichtungen hergestellt werden, die auf den verschiedensten Untergründen, beispielsweise auf Beton, Estrich, Kalksandstein, Ziegel, Bitumen, Elastomerbitumen-Bahnen, Holz, Gußasphalt und dergleichen aufgebracht werden können. Elastische Beschichtung meint im Rahmen der Erfindung insbesondere, daß die Beschichtung eine elastische Verformbarkeit aufweist. Es liegt somit im Rahmen der Erfindung, daß nach einer Verformung der erfindungsgemäßen Beschichtung diese Beschichtung unter Einwirkung elastischer Rückstellkräfte in ihre ursprüngliche Form zurückkehrt. Das erfindungsgemäße Beschichtungsmaterial eignet sich auch als Kleber bzw. Klebstoff. Ohne weiteres können auch Einlagen, beispielsweise gewebeartige oder vliesartige Einlagen in das auf einen Untergrund aufgebrachte Beschichtungsmaterial eingebettet werden.

Grundsätzlich liegt es im Rahmen der Erfindung, daß beide Komponenten getrennt voneinander angesetzt und gehandhabt werden und erst zur Bereitstellung des erfindungsgemäßen Beschichtungsmaterials bzw. zur Herstellung der erfindungsgemäßen Beschichtung miteinander gemischt werden. Es liegt weiterhin im Rahmen der Erfindung, daß die erste Komponente als Trockenmörtel eingesetzt wird, welcher Trockenmörtel mit Hilfe von Wasser aus der zweiten Komponente angemacht wird. Es liegt fernerhin im Rahmen der Erfindung, daß mit einer wäßrigen Dispersion zumindest eines Kunststoffes gearbeitet wird. Das im Patentanspruch 1 genannte Anmachwasser meint insbesondere Anmachwasser, das in einer wäßrigen Kunststoffdispersion der zweiten Komponente enthalten ist und/oder Anmachwasser, das die zweite Komponente zusätzlich enthält.

Besondere Bedeutung kommt im Rahmen der Erfindung dem Merkmal zu, wonach in der ersten Komponente Pulverkautschuk enthalten ist. Bei Pulverkautschuk handelt es sich um ein reaktives Produkt, das insbesondere in verschiedenen Lösungsmitteln löslich ist. Insoweit unterscheidet sich Pulverkautschuk von Gummimehl oder Gummigranulat. Diese letztgenannten Gummiprodukte sind wenig reaktive Produkte, die in den meisten Lösungsmitteln nicht löslich sind. Der Einsatz von Pulverkautschuk ist für die hier beanspruchte Baustoffmischung erfindungswesentlich. Pulverkautschuk ist eine besondere Art von Kautschuk, die durch Ausfällen von Kautschukpartikeln aus einer kautschukhaltigen flüssigen Mischung hergestellt wird. Für das Ausfällen der Kautschukpartikel werden spezielle Fällungsmittel bzw. Koagulationsmittel eingesetzt. Die Kautschukpartikel werden aus Kautschuklatex und/oder aus einer Kautschuklösung und/oder aus einer Kautschuksuspension und/oder aus einer wäßrigen Emulsion einer Kautschuklösung ausgefällt. Bei dem Kautschuk kann es sich um Naturkautschuk oder um synthetischen Kautschuk handeln. Grundsätzlich liegt es im Rahmen der Erfindung, Pulverkautschuk in der Baustoffmischung einzusetzen, dessen Kautschukpartikel keinen Füllstoff aufweisen. Ein Verfahren zur Herstellung von Pulverkautschuk bzw. Kautschukpulver ohne Füllstoff ist beispielsweise aus US 4 265 939 bekannt. - Nach sehr bevorzugter Ausführungsform der Erfindung wird in der erfindungsgemäßen Baustoffmischung jedoch füllstoffhaltiger Pulverkautschuk bzw. füllstoffhaltiges Kautschukpulver eingesetzt. Nach einer Ausführungsform der Erfindung ist der Füllstoff homogen in den einzelnen Kautschukpartikeln verteilt. Bei dem Füllstoff handelt es sich beispielsweise um Ruß oder um gefällte Kieselsäure. Es liegt im Rahmen der Erfindung, daß die Kautschukpartikel des Pulverkautschuks einen oder mehrere Füllstoffe aufweisen. Verfahren zur Herstellung von füllstoffhaltigem Kautschukpulver sind beispielsweise aus DE 37 23 213 C2 und DE 37 23 214 C2 bekannt. - Der Füllstoffgehalt der vorzugsweise eingesetzten füllstoffhaltigen Kautschukpartikel beträgt zweckmäßigerweise 25 Gew.-% bis 90 Gew.-%, bevorzugt 35 Gew.-% bis 65 Gew.-%, sehr bevorzugt 40 Gew.-% bis 60 Gew.-%. Es liegt fernerhin im Rahmen der Erfindung, daß die Kautschukpartikel des Pulverkautschuks mit einem Beschichtungsmittel beschichtet sind. Bei dem Beschichtungsmittel kann es sich grundsätzlich um eine Substanz handeln, die dem Füllstoff der Kautschukpartikel entspricht.

Nach einer bevorzugten Ausführungsform wird für die erfindungsgemäße Baustoffmischung ein füllstoffhaltiger Pulverkautschuk eingesetzt, der im Rahmen eines kontinuierlichen Verfahrens hergestellt wird. Dabei werden Kautschukmaterial und Füllstoff in flüssiger Phase gemischt. Die flüssige Mischung enthält zunächst eine Suspension, vorzugsweise wäßrige Suspension des Füllstoffes, beispielsweise Ruß. Weiterhin enthält die flüssige Mischung das Kautschukmaterial als Kautschuklatex und/oder Kautschuklösung und/oder wäßrige Emulsion einer Kautschuklösung. Als Kautschukmaterial wird ein synthetischer und/oder natürlicher Kautschuk eingesetzt. Als Kautschuklatex kann ein Styrol-Butadien-Latex verwendet werden. Die flüssige Mischung aus dem Kautschukmaterial und dem Füllstoff wird vorzugsweise durch ein Rohr geleitet und mit zumindest einem Koagulationsmittel versetzt. Zweckmäßigerweise wird die flüssige Mischung durch zumindest eine in dem Rohr vorgesehene Drosselstelle geleitet, um eine effektive Vermischung zu erzielen. Als Koagulationsmittel wird vorzugsweise zumindest ein Metallsalz aus der Gruppe "Aluminiumsalz, Bariumsalz, Eisensalz, Kobaltsalz, Nickelsalz, Magnesiumsalz, Zinksalz" eingesetzt. Bevorzugt wird als Koagulationsmittel ein Aluminiumsalz, sehr bevorzugt Aluminiumsulfat verwendet. Vorzugsweise werden zur Ausfällung der Kautschukpartikel 0,1 bis 2 Gewichtsteile eines wasserlöslichen Metallsalzes pro 100 Gewichtsteile Kautschuk als Koagulationsmittel zugefügt. Im Rahmen dieses kontinuierlichen Verfahrens werden füllstoffhaltige Kautschukpartikel ausgeschieden, die sich als Pulverkautschuk für die erfindungsgemäße Baustoffmischung besonders eignen. Es liegt außerdem im Rahmen der Erfindung, die ausgefällten Kautschukpartikel mit einem Beschichtungsmittel zu beschichten. Dabei wird das Beschichtungsmittel, das gegebenenfalls einem Füllstoff für den Kautschuk entsprechen kann, zu dem ausgefällten Kautschukmaterial gegeben. Die mit dem genannten Verfahren erzeugten füllstoffhaltigen Kautschukpartikel werden zweckmäßigerweise von der flüssigen Phase getrennt und anschließend getrocknet. Im Anschluß daran sind die Kautschukteilchen grundsätzlich für den Einsatz als Pulverkautschuk in der erfindungsgemäßen Baustoffmischung bereit. Nach einer anderen Ausführungsform der Erfindung wird für die erfindungsgemäße Baustoffmischung ein füllstoffhaltiger Pulverkautschuk eingesetzt, der im Rahmen eines diskontinuierlichen Verfahrens hergestellt wird. Beispielsweise aus DE 37 23 213 C2 und DE 37 23 214 C2 sind neben den vorstehend erläuterten kontinuierlichen Verfahrens auch solche diskontinuierlichen Verfahren zur Herstellung von füllstoffhaltigem Pulverkautschuk bekannt. - Die erfindungsgemäß eingesetzten Kautschukpartikel weisen zweckmäßigerweise Korngrößen im Bereich von 0,1 bis 5,5 mm, insbesondere 01, bis 2,5 mm auf.

Nachfolgend werden Gew.-%-Angaben für die erste Komponente der Baustoffmischung aufgeführt. Es versteht sich, daß sich die Gew.-%-Werte aller Bestandteile der ersten Komponente insgesamt zu 100 Gew.-% addieren. - Nach sehr bevorzugter Ausführungsform der Erfindung enthält die erste Komponente 5 bis 85 Gew.-%, vorzugsweise 10 bis 60 Gew.-%, sehr bevorzugt 15 bis 40 Gew.-% Pulverkautschuk. Zweckmäßigerweise wird ein Pulverkautschuk mit füllstoffhaltigen Kautschukpartikeln eingesetzt. Nach einer Ausführungsform der Erfindung weisen die Kautschukpartikel außerdem eine Beschichtung mit einem Beschichtungsmittel auf. - Nach bevorzugter Ausführungsform der Erfindung enthält die erste Komponente außerdem 10 bis 85 Gew.-%, vorzugsweise 30 bis 65 Gew.-%, bevorzugt 40 bis 60 Gew.-% zumindest eines anorganischen Füllstoffes. Es liegt im Rahmen der Erfindung, daß zumindest ein anorganischer Füllstoff aus der Gruppe "Quarzsand, Quarzmehl, Calcit, Dolomit, Schwerspat, Flugasche, Blähton, Blähglas, Korund, Siliciumcarbid" in der ersten Komponente enthalten ist. Es können auch Mischungen der vorgenannten Füllstoffe als anorganischer Füllstoff in der ersten Komponente verwendet werden.

Nach sehr bevorzugter Ausführung der Erfindung enthält die erste Komponente zumindest ein hydraulisches Bindemittel. Nach einer Ausführungsform der Erfindung enthält die erste Komponente 1 bis 15 Gew.-%, vorzugsweise 2 bis 10 Gew.-%, sehr bevorzugt 3 bis 8 Gew.-% zumindest eines hydraulischen Bindemittels. Zweckmäßigerweise ist zumindest ein Zement als hydraulisches Bindemittel in der ersten Komponente enthalten. Nach einer Ausführungsform ist in der ersten Komponente als hydraulisches Bindemittel lediglich Zement vorgesehen ist. Vorzugsweise wird als hydraulisches Bindemittel zumindest ein Zement aus der Gruppe "Portlandzement, Traßzement, Tonerdeschmelzzement" eingesetzt. Es können auch Mischungen der vorgenannten Zementsorten als hydraulisches Bindemittel in der ersten Komponente verwendet werden.

Nach einer Ausführungsform der Erfindung enthält die erste Komponente der Baustoffmischung 0,05 bis 2 Gew.-%, vorzugsweise 0,05 bis 1 Gew.-%, sehr bevorzugt 0,1 bis 0,5 Gew.-% zumindest eines Verdickungsmittels. Es liegt im Rahmen der Erfindung, daß zumindest ein Verdickungsmittel aus der Gruppe "Hydroxyethylcellulose, Methylcellulose, Bentonit" in der ersten Komponente enthalten ist. - Vorzugsweise enthält die erste Komponente fernerhin 0,01 bis 2 Gew.-%, vorzugsweise 0,01 bis 1 Gew.-%, sehr bevorzugt 0,1 bis 0,5 Gew.-% zumindest eines Entschäumers. Als Entschäumer können beispielsweise Kohlenwasserstoffe mit Polyglykol auf Kieselsäure verwendet werden. - Nach einer Ausführungsform der Erfindung sind in der ersten Komponente der Baustoffmischung außerdem 0,1 bis 10 Gew.-%, vorzugsweise 1 bis 6 Gew.-% zumindest eines organischen Füllstoffes enthalten. Zweckmäßigerweise wird als organischer Füllstoff zumindest eine Substanz aus der Gruppe "geschäumtes Polystyrol, Polyethylen, Polypropylen, Gummimehl, Gummigranulat" eingesetzt. Es können auch Mischungen der vorgenannten Füllstoffe in der ersten Komponente der Baustoffmischung verwendet werden.

Nachfolgend werden Gew.-%-Werte für die zweite Komponente der Baustoffmischung aufgeführt. Es versteht sich, daß die Gew.-%-Angaben aller jeweils in der zweiten Komponente enthaltenen Substanzen sich insgesamt zu 100 Gew.-% addieren.

Nach sehr bevorzugter Ausführungsform der Erfindung weist die zweite Komponente 50 bis 100 Gew.-%, vorzugsweise 55 bis 85 Gew.-%, sehr bevorzugt 60 bis 80 Gew.-% der Kunststoffdispersion auf. Vorzugsweise beträgt der Kunststoffanteil in der Dispersion 35 bis 70 Gew.-%, bevorzugt 40 bis 65 Gew.-%. Zweckmäßigerweise wird eine wäßrige Kunststoffdispersion eingesetzt. - Nach bevorzugter Ausführungsform enthält die zweite Komponente eine Dispersion von zumindest einem Kunststoff aus der Gruppe "Acrylat, Styrol-Acrylat-Copolymer, Styrol-Butadien-Copolymer" oder von Mischungen dieser Kunststoffe. Acrylat meint insbesondere eine Acrylsäureester. Grundsätzlich liegt es auch im Rahmen der Erfindung, eine Dispersion von Acrylnitril und/oder Styrol-Acrylnitril-Copolymer und/oder Styrol in der zweiten Komponente einzusetzen. Zweckmäßigerweise wird die Dispersion eines Kunststoffes eingesetzt, der mit dem hydraulischen Bindemittel, vorzugsweise mit dem Zement der ersten Komponente verträglich ist.

Nach einer Ausführungsform der Erfindung enthält die zweite Komponente 0,1 bis 50 Gew.-%, vorzugsweise 15 bis 45 Gew.-%, sehr bevorzugt 20 bis 40 Gew.-% Wasser. Wenn im Rahmen der Erfindung eine wäßrige Dispersion des zumindest einen Kunststoffes eingesetzt wird, handelt es sich bei diesem Wasser um zusätzliches Anmachwasser neben dem in der Dispersion enthaltenen Wasser. - Es liegt weiterhin im Rahmen der Erfindung, daß die zweite Komponente 0,1 bis 5 Gew.-%, vorzugsweise 0,5 bis 3 Gew.-% zumindest eines Verdickungsmittels enthält. Zweckmäßigerweise wird zumindest ein Verdickungsmittel aus der Gruppe "Polyacrylat, Polyurethan" oder Mischungen davon als Verdickungsmittel eingesetzt. Nach einer Ausführungsform der Erfindung weist die zweite Komponente 0,01 bis 1,5 Gew.-%, vorzugsweise 0,2 bis 0,7 Gew.-% zumindest eines Entschäumers auf. Als Entschäumer kann beispielsweise eine Polysiloxanemulsion und/oder eine Emulsion hydrophober Komponenten und paraffinbasischer Mineralöle eingesetzt werden. Fernerhin können als Entschäumer auch Kohlenwasserstoffe mit modifizierten Feststoffen und nicht ionogenen Emulgatoren verwendet werden. -Nach einer Ausführungsform der Erfindung enthält die zweite Komponente der Baustoffmischung 0,05 bis 1 Gew.-%, bevorzugt 0,1 bis 0,5 Gew.-% zumindest eines Topfkonservierers.

Nach sehr bevorzugter Ausführungsform der Erfindung wird zur Herstellung der erfindungsgemäßen Baustoffmischung die erste Komponente mit der zweiten Komponente in einem Gewichtsverhältnis von 1 : 0,5 bis 1 : 2 gemischt. Das Verhältnis erste Komponente : zweite Komponente beträgt also vorzugsweise 1 : 0,5 bis 1 : 2. Nach sehr bevorzugter Ausführungsform beträgt das Gewichtsverhältnis etwa 1 : 1. Nach dem Mischen der beiden Komponenten kann das erhaltene Beschichtungsmaterial auf die betreffende Oberfläche bzw. auf den betreffenden Untergrund aufgebracht werden. Es liegt im Rahmen der Erfindung, daß sich daraufhin ein Trocknen bzw. Erstarren dieser Beschichtung anschließt.

Der Erfindung liegt die Erkenntnis zugrunde, daß mit der erfindungsgemäßen Baustoffmischung eine Beschichtung für die unterschiedlichsten Untergründe bzw. Oberflächen hergestellt werden kann, wenn mit den beiden erfindungsgemäßen Komponenten gearbeitet wird und diese zu dem Beschichtungsmaterial gemischt werden. Von besonderer Bedeutung ist in diesem Zusammenhang der Einsatz des Pulverkautschuks in der ersten Komponente. Nach bevorzugter Ausführungsform werden in dieser ersten Komponente mehr als 10 Gew.-%, vorzugsweise mehr als 12 Gew.-%, sehr bevorzugt mehr als 15 Gew.-% Pulverkautschuk eingesetzt. Die erfindungsgemäße Baustoffmischung bzw. das erfindungsgemäße Beschichtungsmaterial ist zunächst kostengünstig und auf einfache wenig aufwendige Weise herstellbar. Auch die Verarbeitbarkeit der Baustoffmischung entspricht allen Anforderungen. Da die Viskosität des Beschichtungsmaterials optimal steuerbar bzw. einstellbar ist, ist beispielsweise eine Verarbeitung als Spachtelmasse oder Schlämmasse oder als spritzbares Material möglich. Die erfindungsgemäß hergestellte Beschichtung haftet optimal auf den verschiedensten Untergründen/Oberflächen. Es kann problemlos eine geschlossene Beschichtungsdecke bzw. ein geschlossener Schutzfilm erzielt werden, so daß auch eine effektive Abdichtung erreicht werden kann. So kann beispielsweise eine Schutzschicht auf einer Betonoberfläche hergestellt werden. Mit der erfindungsgemäßen Baustoffmischung kann ohne weiteres eine sehr elastische Beschichtung erzeugt werden. Überraschenderweise kann die Elastizität über einen weiten Temperaturbereich, insbesondere von -50° C bis +80° C ohne Beeinträchtigung der elastischen Eigenschaften der Beschichtung aufrechterhalten werden. Von besonderer Bedeutung ist der Einsatz des Beschichtungsmaterials aufgrund der hervorragenden Rißüberbrückungsfähigkeit der Beschichtung. Diese optimale Rißüberbrückungsfähigkeit bleibt überraschenderweise über einen weiten Temperaturbereich erhalten. Ohne Probleme können mit der erfindungsgemäßen Beschichtung Risse mit einer Breite von 2 mm und mehr überbrückt werden. Die Beschichtung eignet sich sogar zur Überbrückung von Risse in der Größenordnung von 6 bis 7 mm. - Die erfindungsgemäße Beschichtung genügt im Hinblick auf die üblichen mechanischen, thermischen und chemischen Beanspruchungen allen Anforderungen. Insbesondere die chemische Widerstandsfähigkeit von Oberflächen, beispielsweise von Betonoberflächen kann durch die erfindungsgemäße Beschichtung erhöht werden. Die Beschichtung ist ohne weiteres beständig gegen Wasser als auch beständig gegenüber Säuren, Laugen sowie einer Vielzahl weiterer aggressiver Medien. Auch langfristig zeigt die erfindungsgemäß aufgebrachte Beschichtung keinerlei Neigung zur Rißbildung. Die Beschichtung kann auch in verhältnismäßig geringen Schichtdicken aufgebracht werden. Die Dicke einer erfindungsgemäßen elastischen Beschichtung beträgt nach dem Trocknen beispielsweise 1 bis 10 mm, bevorzugt 1 bis 5 mm. In die erfindungsgemäße Beschichtung können auch problemlos Gewebeeinlagen und/oder Vlieseinlagen eingearbeitet werden.

Nachfolgend wird die Erfindung anhand eines Ausführungsbeispiels näher erläutert: Vorzugsweise wird für die erfindungsgemäße Baustoffmischung eine erste Komponente eingesetzt, die 30 bis 60 Gew.-% Pulverkautschuk sowie 40 bis 60 Gew.-% einer Mischung aus Quarzsand und Quarzmehl als anorganischen Füllstoff enthält. Fernerhin sind in der ersten Komponente zweckmäßigerweise 3 bis 8 Gew.-% eines hydraulischen Bindemittels, vorzugsweise eines Zementes vorgesehen. Die erste Komponente kann weiterhin 0,1 bis 0,5 Gew.-% eines Entschäumers enthalten. Zusätzlich kann die erste Komponente 0,1 bis 0,5 Gew.-% eines Verdickungsmittels und/oder 1 bis 6 Gew.-% eines organischen Füllstoffes aufweisen. - Für die Baustoffmischung wird fernerhin eine zweite Komponente eingesetzt, die 60 bis 90 Gew.-% einer Kunststoffdispersion enthält. Beispielsweise handelt es sich bei der Kunststoffdispersion um eine wäßrige Dispersion von Styrol-Acrylat. Die zweite Komponente weist außerdem zweckmäßigerweise 10 bis 40 Gew.-% Wasser auf. Die zweite Komponente kann außerdem 0,5 bis 3 Gew.-% eines Verdickungsmittels und/oder 0,2 bis 0,7 Gew.-% eines Entschäumers und/oder 0,1 bis 0,5 Gew.-% eines Topfkonservierers enthalten. - Die beiden Komponenten werden zweckmäßigerweise im Gewichtsverhältnis von etwa 1 : 1 miteinander vermischt. Das auf diese Weise erhaltene Beschichtungsmaterial hat beispielsweise eine pastöse Konsistenz und kann problemlos auf den verschiedensten Untergründen/Oberflächen aufgebracht werden.

## Patentansprüche

1. Baustoffmischung für die Herstellung einer Beschichtung,
wobei eine erste Komponente vorgesehen ist, die Pulverkautschuk sowie zumindest einen anorganischen Füllstoff enthält,
wobei eine zweite Komponente vorgesehen ist, die eine Dispersion zumindest eines Kunststoffes aufweist
und wobei zumindest eine der beiden Komponenten Anmachwasser enthält und die beiden Komponenten zu einem Beschichtungsmaterial mischbar sind.

2. Baustoffmischung nach Anspruch 1, wobei die erste Komponente 5 bis 85 Gew.-%, vorzugsweise 10 bis 60 Gew.-% Pulverkautschuk enthält.

3. Baustoffmischung nach einem der Ansprüche 1 oder 2, wobei die erste Komponente 10 bis 85 Gew.-%, vorzugsweise 30 bis 65 Gew.-% zumindest eines anorganischen Füllstoffes enthält.

4. Baustoffmischung nach einem der Ansprüche 1 bis 3, wobei zumindest ein anorganischer Füllstoff aus der Gruppe "Quarzsand, Quarzmehl, Calcit, Dolomit, Schwerspat, Flugasche, Blähton, Blähglas, Korund, Siliciumcarbid" in der ersten Komponente enthalten ist.

5. Baustoffmischung nach einem der Ansprüche 1 bis 4, wobei die erste Komponente zumindest ein hydraulisches Bindemittel enthält.

6. Baustoffmischung nach einem der Ansprüche 1 bis 5, wobei die erste Komponente 1 bis 15 Gew.-%, vorzugsweise 2 bis 10 Gew.-% zumindest eines hydraulischen Bindemittels enthält.

7. Baustoffmischung nach einem der Ansprüche 1 bis 6, wobei die zweite Komponente 50 bis 100 Gew.-%, vorzugsweise 55 bis 85 Gew.-% der Kunststoffdispersion aufweist.

8. Baustoffmischung nach einem der Ansprüche 1 bis 7, wobei die zweite Komponente eine Dispersion von zumindest einem Kunststoff aus der Gruppe "Acrylat, Styrol-Acrylat-Copolymer, Styrol-Butadien-Copolymer" oder von Mischungen dieser Kunststoffe enthält.

9. Baustoffmischung nach einem der Ansprüche 1 bis 8, wobei die zweite Komponente 0,1 bis 50 Gew.-%, vorzugsweise 15 bis 45 Gew.-% Wasser enthält.

10. Baustoffmischung nach einem der Ansprüche 1 bis 9, wobei die erste Komponente mit der zweiten Komponente in einem Gewichtsverhältnis von 1 : 0,5 bis 1 : 2 gemischt wird.
